# EUROPEAN PATENT SPECIFICATION

(11) **EP 1 557 749 B1**
(45) Date of publication and mention of the grant of the patent: **17.03.2010**
(21) Application number: 05100086.7
(22) Date of filing: 10.01.2005
(51) Int. Cl.: G06F 3/12, G06F 3/033, G06F 9/445

(54) **Printer driver with automatic template generation**
Druckertreiber mit automatischer Generation von Musterkonfigurationen
Pilote d'imprimante avec génération automatique de configuration type

(30) Priority: 23.01.2004 EP 04075139
(43) Date of publication of application: 27.07.2005
(73) Proprietor: Océ-Technologies B.V., 5914 CC Venlo (NL)
(72) Inventor: Toumanova, Veronica, 5915 CA, Venlo (NL); Hermus, Bastiaan J., 5644 EV, Eindhoven (NL); Dongelmans, Ronald R.F., 6536 CE, Nijmegen (NL); Morskate, Anita C., 5913 CZ, Venlo (NL); Van Vonderen, Robert L.A.H., 5803 JW, Venray (NL); De Jong, Frederik, 6071 KP, Swalmen (NL)
(74) Representative: van Meeteren, Arend Anthonie

(56) References cited:
- WO-A-01/63381
- WO-A-02/075643
- US-A- 6 147 767
- ANONYMOUS: "Proposal to configure a printer driver for customized formatting/finishing or print jobs" RESEARCH DISCLOSURE, [Online] September 2001 (2001-09), page 449055, XP002301959 Journal Retrieved from the Internet: URL:http://www.researchdisclosure.com/rd/s earch/RD449055.pdf> [retrieved on 2004-10-19]

## Description

The present invention relates to a method of printing documents from a user workstation, comprising:
- activating a printer driver for submitting a digital document file to a printer,
- specifying print process settings in the printer driver, and
- commanding the driver to submit the document file and the settings to the printer, wherein values of settings are either individually or collectively specified, a collective specification being a selection of a user-selectable prestored set of settings, further to be called "template". The present invention also relates to a printer driver, a computer program implementing the method of the invention and a computer-readable medium carrying computer code for performing the method.

A method of this kind Is known per se. For instance, WO 01/63381 A discloses a method which configures a printer for printing by using a template; the template has various parameters which the user inputs. Templates can be saved and repeatedly used. A user can save and create new templates or edit previously created templates.

US-A-6 147 767 describes a method for controlling a printer. A graphical user interface with various input boxes allows the user to set the parameters of printer operation, which are sent to a CPU which sets up its circuitry based on these parameters. The host computer can also save the settings entered on the user Interface screen to a file on the host computer to record these settings.

Further, WO 02/075643 describes a system wherein an operator may specify a set of standard print parameters for a new job by using a soft key associated with a desired job template, representing a predefined set of frequently used parameters; templates are identified by a name and symbol. Once a template has been selected, the print parameters specified therein may be edited.

Finally, a publication in Research Disclosure of September 2001, p. 1506, ref. no. 449055: "Proposal to configure a printer driver for customized formatting/finishing of print jobs" discloses a printer driver window including a plurality of predefinable buttons, each associated with a set of settings values. By clicking such a button, the user applies all associated settings values at once. These values may then still be changed by individual resetting. Buttons may be predefined by a user or be downloaded from a central server.

Although such pre-programmed buttons (or "templates", in the language of the present patent application), add to the comfort of a user by providing a fast and consistent programming of print setting for a small number of standard print formats, every new format a user wants to use must be programmed and stored in advance. In practice, however, it will often occur that a user introduces a new format in the process of printing and forgets to save it in advance. When the print command has been given, the printer driver disappears and if the user wants to apply the new settings again, he has to reprogram the driver again.

The present invention has the object to improve the known method/printer driver in such a way that a user is enabled to use an amended set of print settings again for a new print job with minimal effort.

This object is achieved by a method as specified in the preamble and
**characterized in that** each time a value of at least one of a predetermined set of settings is individually specified by the user and confirmed by a user command to submit the document file and the settings to the printer, a new template is automatically defined and made selectable in the printer driver.

According to the invention, once an amended set of print settings has been used, this set is automatically added to the list of selectable templates in the driver window. Simple mechanisms for renaming a template and for deleting a superfluous template provide comfort to the user.

In a further embodiment, newly-defined templates are not immediately permanent, but may be made so by a save action of the user. Renaming a new template, which implicitly indicates that the user wants to maintain it, automatically makes that template permanent as well.

Templates that have not been made permanent by the user are maintained on a first in - first out basis, such as not to exceed a number of N. N will normally be a predetermined small number, e.g. smaller than 4. Alternatively, the value of N is configurable for the user. In this way, the number of templates can easily be kept surveyable for the user.

Further advantageous aspects of the present invention are recited in the dependent claims.

These and other aspects of the Invention will be apparent from and elucidated further with reference to the embodiments described by way of example in the following description and with reference to the accompanying drawings, In which
Fig. 1 shows a network system of workstations and printers;
Fig. 2 shows a schematic functional view of a system according to the present invention;
Fig. 3 shows a job specification window of a printer driver according to the invention;
Fig. 4 shows a schematic setup of the same window;
Fig. 5, 6, 8, 9 and 10 show other views of the job specification window;
Fig. 7 shows a schematic functional view of a system according to another embodiment of the present invention; and
Fig. 11 shows a flow chart of process of using and generating templates in a print job definition process according to the present invention.
Fig. 12 shows a flow chart of process of using and generating templates according to an alternative embodiment of the invention.

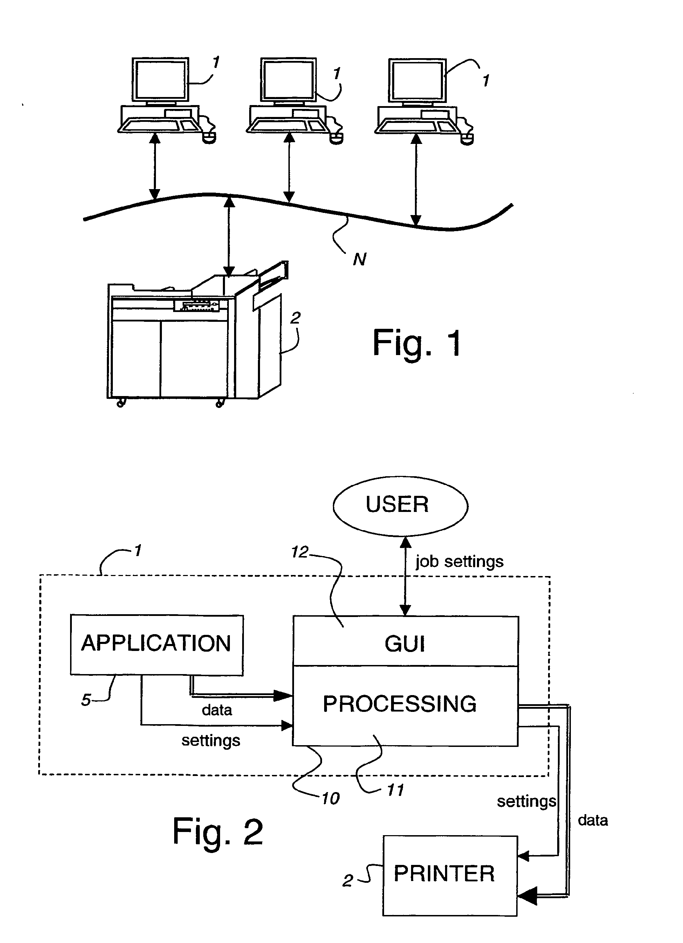

Fig. 1 shows a system of workstations (1) and at least one printer (2) connected by a local network (N). Workstations, for example, are PC's and are In each case equipped with a processor unit, a monitor, a keyboard and a mouse or other indicator instrument. The term "printer" includes a digital copying machine in this context. Users who wish to have a specific data file printed from their workstation can choose from a plurality of printers or even from all the printers in the system.

In order to be able to send a print file to a printer, a workstation must include a program, called "printer driver". A printer driver program is logically coupled via the network N to one of the printers. When the user has access to a plurality of printers, his workstation contains a printer driver for each one of them.

Fig. 2 shows a schematic functional view of a system of a user workstation 1 and a printer 2. The workstation 1 includes an application program 5 for producing files for printing, such as a document editor, and a printer driver program 10.

When a user wants to have a print job printed, he calls up the printer driver, for example by clicking an icon intended therefor in the application window on his display screen. Alternatively, the printer driver may be called up via the print service of the operating system. For instance, in MS Windows the print service is activated via the File menu and a job specification window may be opened by clicking the "Properties" window.

As shown schematically in Fig. 2, the printer driver program 10 includes a data processing portion 11 for reformatting the image data from the application program 5 into print data usable for the printer 2 (generally in page description language such as Postscript) and for handling system management information, and a user interface portion 12 for communicating with the user.

Upon activation, the printer driver user interface portion 12 opens a job specification window on the workstation display screen, into which the user can input specifications for the intended print job, such as the number of copies, single or double sided printing, and so on. The user may select job settings or accept the preselected default settings. Some of the settings may already be selected by or with the application. Finally, the user must activate (click) a print button in the driver window. In reaction, the printer driver renders the print data and sends them, together with the job settings, to the printer 2 via the network (not shown in Fig. 2).

Additionally, the printer 2 sends status information back to the printer driver 10, that presents such information to the user via the user interface 12.

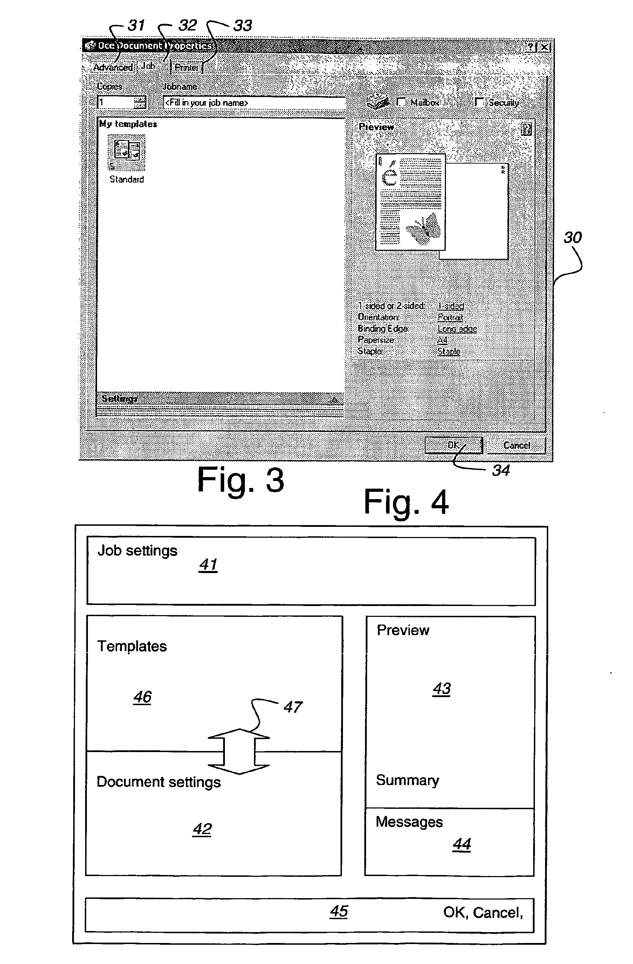

Fig. 3 shows a job specification window 30 of a printer driver according to the invention. The window includes three tab sheets 31, 32, 33 placed on top of each other and selectable by clicking on the relevant tab. The tab sheet shown in Fig. 3 is the "Job" tab 32. This tab sheet 32 is dedicated to the definition of a new print job. The other tab sheets include "Printer", for system and status information of the printer device, and "Advanced", for specifying detailed settings such as font selection and pdl interpreter control, normally not used in job specification.

The "Job" tab sheet 32 is more schematically shown in Fig. 4, and comprises the following fields:
- Job settings (41). Here the user can define settings that affect the workflow of the job, and do not affect the printed document. The settings are <number of copies>, <job name>, <mailbox> and <security>. If "mailbox" is checked, print jobs are not immediately printed upon reception at the printer, but wait there for selection and subsequent starting by an operator at the printer console. If "security" is checked, the user is prompted for a code string. The job is then also not immediately printed, and can only be started at the printer console by entering the code string.
- Document settings (42). In this field settings can be specified that do affect the printed document. For the comfort of the users, the settings are arranged in a number of collapsible groups to make them easily surveyable. In an exemplary embodiment, the following groups are defined:

### Layout

The settings in this group describe how the pages of the document should look like. Here one can choose the orientation of the pages, whether the document is 1-sided or 2-sided, define the position of the binding edge and the margin shift. If a user wants to have 2 pages printed on one sheet or wants the document to look like a Booklet, he can also find the relevant settings in this group.

### Paper

The settings in this group describe on which paper the document should be printed. Here one can choose the size and the paper type for the document, but also define a different paper type for the front and back cover. From here a Page Programming tool can be activated to define sets of different paper types within a document.

### Finishing

The settings is this group describe how the document should be bound and delivered at the printer. Here one can choose the staple option, the output bin of the printer, or specify that copies be collated or not.

### Image

The settings in this group describe how the content of the pages should look like on the print. Here one can select rough or fine image quality, put a Watermark across the content of your document, mirror or invert the image.

### Accounting

The settings in this group allow a user to provide personal accounting information for the prints. This will be further explained below.

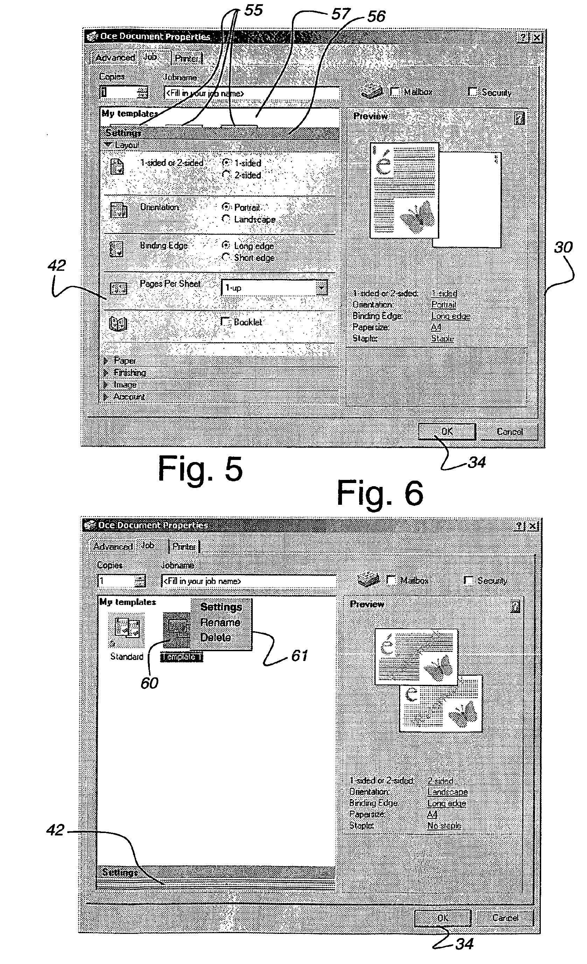

In Fig. 3, the settings groups are all in the collapsed state. By clicking the arrow triangle in the Settings bar, one of the groups is exploded. This is shown in Fig. 5 for the Layout group. The described embodiment of groupings and settings is to be considered an example, and many other embodiments will be apparent to a skilled person.

Continuing the fields of the "Job" tab sheet 32:
- Preview and Summary (43). As discussed above, the amount of settings can be very large. Most users will only use a small part of all these settings, and most settings will only be changed occasionally.
To accommodate for this the driver will show a summary, containing the most commonly used settings (and their value) for that printer, which provide a direct access to these settings.
The structure of the summary items is:

### <Setting name> [Setting value]

Clicking the [Setting value] will open the relevant group in the settings field 42.
The preview shows graphically the settings (as far as possible) made or accepted by the user.
- Message area (44). Below the summary an area is reserved for relevant messages from the system to the user. These are error, contradiction or supplies related messages. For instance, when a user selects settings that are mutually exclusive (or at least not logically combinable), a summarizing message appears in field 44. together with an "Undo" button for undoing the last, controversial selection. One example of such a situation is, when a user selects single sided-printing and "Booklet imposition" (settings shown in Fig. 5), which is an illogical combination, the system automatically changes "1-sided" into "2-sided" in the settings field, places an attention sign close to the changed setting, and shows a message summarizing the automatic change in the message field 44, together with an "Undo" button for the "Booklet" selection.
- An area (45) at the bottom of the driver window (in fact, outside the "Job" tab sheet) is reserved for Windows' OK and Cancel buttons.
- Templates (46). A template is defined as a coherent set of setting-defaults describing a print job. A template is based on capabilities of a specific printer or printer type. It allows the user to define a print job in a quick and efficient way by simply clicking a corresponding icon in the Templates field 46.

A template is automatically created every time the user selects an already existing template, changes one or more of its settings, and confirms the change(s) by clicking the "OK" button in area 45. A new template, containing these new setting(s), is automatically added to the list, and is given the following name: Template {n} (n is an integer number).

Every time a new template is created it is assigned the following available number (n + 1). As long as there are numbered templates in the Template view 46, each new template gets a number higher than the highest existing one. If the user renames or deletes the numbered templates so that there are no numbers left (n = 0), the system starts with 1 again. Also, other naming conventions are contemplated, e.g. including a date/time stamp or including the name of the document file for which it is created.

Once created, a template does not change. It can not be edited, except for its name. The name is changed by using the contextual menu ("double click") option 'Rename'.

A template can be deleted by the user, depending on location and situation. In an embodiment, templates that are not renamed within a predetermined time period, e.g. a day, are automatically deleted, under the presumption that a template is obviously not intended to be saved when the creator does not take the effort to make it recognizable by renaming it. Also, a template may be automatically deleted when it has not been used during a (possibly user-programmable) predetermined time. However, in a further embodiment, one or more templates may be defined as undeletable by the system administrator, such as the "Standard" template shown in Fig. 3. This latter feature provides a means to impose "company defaults". Undeletable templates may be shown with an added padlock icon in the Templates field 46.

In order to prevent the number of templates from growing uncontrollably, in an embodiment of the present invention, the number of newly-created templates is maximized at a predetermined value N, on a first in - first out (FIFO) basis. This means that, when a new template would get the number N + 1, the oldest new template is automatically deleted. The number N would typically be low, otherwise, a user would not be able to remember what the new templates were used for.

In a special embodiment, N is equal to 1. In many cases, a user changes the settings of the print process and then clicks the "OK" button of the printer driver. In reaction, the print job is submitted to the printer and the printer driver window disappears. Normally, that is the moment the user realises that he wanted to keep those settings for a further print job. It would be very handy, if those settings would be recoverable, and the present invention provides a method therefor by defining a "last used" template for the user to recall. For those situations, a value of N=1 would be sufficient. In yet another embodiment, the value of N is configurable for the user, such that he can make the system behave in the way he prefers.

In a further embodiment, the new templates can be taken out of the FIFO queue by an explicit save action of the user. Those templates are then made permanent and remain selectable for the user. Renaming a template (as described hereinabove) automatically saves a template into a permanent state. Other ways of making a new template permanent, such as an explicit "Save" option, either in a pop-up menu as described below with reference to Fig. 6, or in the form of a dedicated key in the printer driver window, are also contemplated by the inventors.

A template can be created on 2 locations: in the driver launched from the printing preferences (via Windows Start menu), and in the printer driver launched from an application (e.g. MS Word).

A template is represented in the Templates field 46 by an icon and a name. The icon is dynamic and is a smaller representation of the Preview. A limited number of the settings represented by the template can be recognized in the icon. When a template is selected, the preview of the result is displayed in the Preview section. A template displays a tool tip with its full name and its creation date/time.

Double-clicking the template object opens the Settings field 42 as shown in Fig. 5. On the click of the right mouse button, on a template icon (60) a contextual menu 61 is opened as shown in Fig. 6. This menu contains the following options: Settings (opens the Settings field 42 for redefining settings), Rename (for changing the name as presented in the Templates field 46 and automatically saving as a permanent template), and Delete (for deleting a template, in order to prevent the number of templates from growing too far, and to eliminate non-functional and no-longer used templates). In addition, although not shown in Fig. 5, the menu may include a "Save" option for making the template permanent.

Using these options, a user can easily adapt the template mechanism to his needs and wishes.

Templates can have four states: enabled, enabled-locked, disabled and disabled-locked. When a template is disabled, it cannot be used (the print button does not work). Disabling may e.g. be user-dependent. When a template is locked, the user cannot delete this template.

As shown in Fig. 4, the Templates field 46 and the Settings field 42 share one space in the printer driver window, as represented by an arrow 47. For handling templates, the settings field is collapsed, and this is also the normal view when the driver window is opened. When the settings field is opened, a small strip of the templates (55) is still visible, to avoid that the user cannot retrieve the templates, as can be seen in Fig. 5. The settings can be closed by either clicking on the Settings bar 56 or clicking on the small part (57) of the templates area that is still visible.

After having selected a template and possibly having changed one or more of the settings therein, the user may now click the "OK" button 34 (Fig. 3) in the lower right corner of the driver window to confirm the settings (which action automatically creates a new template, as explained above), return to the (Windows) print service and activate the print command.

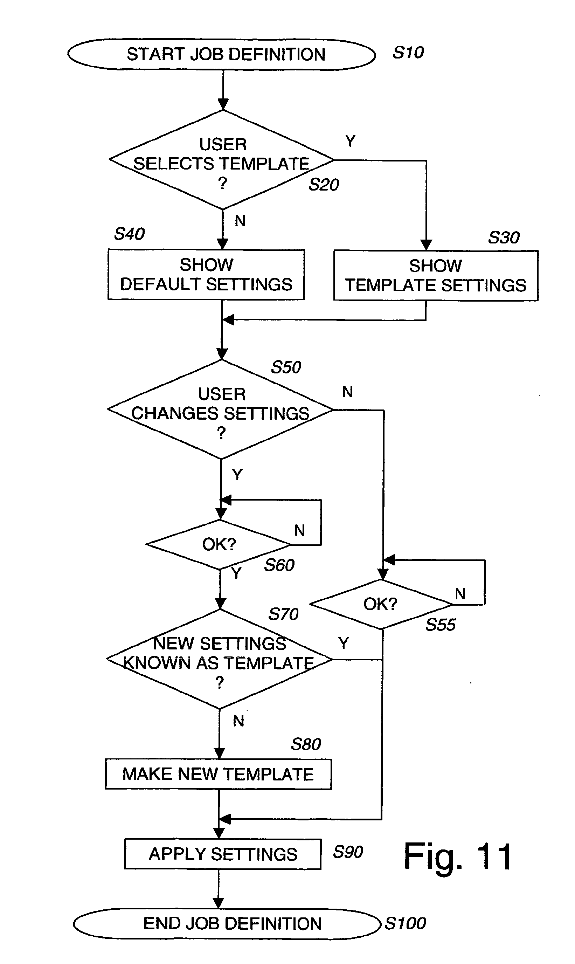

The process of using and generating templates in a print job definition process is now summarized with reference to Fig. 11.

In step S10, the user enters the user interface window of the printer driver, and more specifically the tab sheet "Job" (32) thereof. In order to define the print job, the user may now select a template or, by not selecting, accept the present default template (which may in one embodiment be the "standard" template and in another embodiment the template used in the last previous print job), step S20, and the system shows the momentary choice (S30 or S40). Next, the system checks in step S50 whether the user makes changes to the presently shown settings.

If the user is satisfied with the presently presented settings and clicks the "OK" button 34 without changes (S55), the system applies the settings (S90) and leaves the job definition phase in S100.

If the user does change the settings (and confirms the changes by clicking the "OK" button 34, S60), the system checks in step S70 whether the newly defined set of setting values is already known as a template. If not, the system makes a new template under the default name "Template n", which may later be changed by the user, and makes it available for selection in a following print job definition process (S80). Thereafter, the system applies the new settings (S90) and leaves the job definition phase in S100.

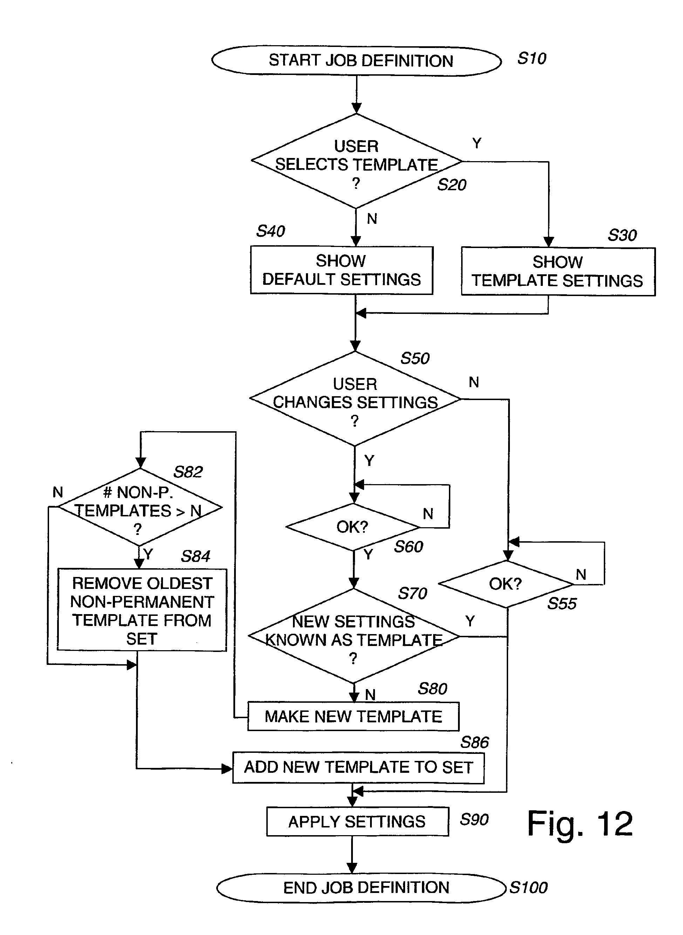

Fig. 12 shows an alternative process, wherein the number of newly-defined templates is maximized to a number of N as described hereinbefore. In this embodiment, a template is non-permanent (as defined above) unless it is explicitly saved or renamed.

In step S10, the user enters the user interface window of the printer driver, and more specifically the tab sheet "Job" (32) thereof. In order to define the print job, the user may now select a template or, by not selecting, accept the present default template (which may in one embodiment be the "standard" template and in another embodiment the template used in the last previous print job), step S20, and the system shows the momentary choice (S30 or S40). Next, the system checks in step S50 whether the user makes changes to the presently shown settings.

If the user is satisfied with the presently presented settings and clicks the "OK" button 34 without changes (S55), the system applies the settings (S90) and leaves the job definition phase in S100.

If the user does change the settings (and confirms the changes by clicking the "OK" button 34, S60), the system checks in step S70 whether the newly defined set of setting values is already known as a template. If not, the system makes a new template (S80) under the default name "Template n", which may later be changed by the user.

Next, in step S82, the system checks if the new template would bring the number of non-permanent templates at a value larger than N. If so, the system automatically deletes the oldest non-permanent template (S84) and adds the new template to the set of selectable templates (S86). The remaining templates may now be renumbered from 1 to N in the display window (Templates field 46 of Fig. 4). Alternatively, the template numbers shown keep counting up, or renumbering may only be done at a command of the user or upon start-up of the PC. Thereafter, the system applies the new settings (S90) and leaves the job definition phase in S100.

Although hereinbefore a change of each and every settings value leads to a new template, it is also contemplated to limit the effect of defining a new template to changes within a limited group of the settings. For instance, a change of the number of copies could well be a change that does not define a new template. Furthermore, the present invention also includes an embodiment in which, before a new template is created, the system first checks if the combination of settings values already exists as a template, and, if so, it does not create a new template. This check may also be limited to the above-mentioned predetermined group of settings.

Templates can in principle be exported to other printer drivers, such that a user does not have to formulate a new template for each printer he can print to.

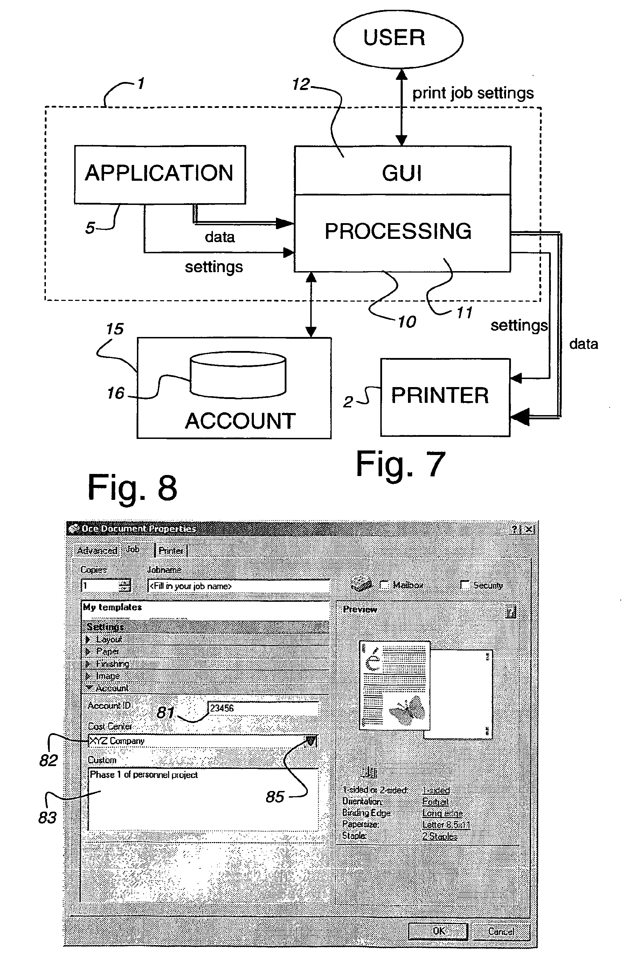

A special application of the settings mechanism will now be explained for the case that a user works for several different accounts and has to assign print jobs to either one of those. In this situation, the overall system may include an accounting application 15 having a database 16 of accounting details, as shown in Fig. 7. The accounting application is connected to the printer driver for exchanging accounting information and to the printer 2 for receiving information concerning the actual print process.

Fig. 8 shows a printer driver window with the Settings field opened for the Account settings. Fig. 8 applies to a user, printing on a basic account having number "23456" as entered in the Account ID field 81, which may be his personal account or a department account or other, and working for a plurality of clients, for whom he must keep separate cost totals. The particular client can be selected in the "Cost Center" field 82, in this example "XYZ Company". In one embodiment, the printer driver, in reaction to entry of a particular account number, queries the accounting application 15 for account entries assigned to that account number, e.g. client names, and then presents a pick list of clients in the "Cost Center" field, based on the information stored in the database 16 for that particular account number. The user may inspect the pick list by clicking the button 85 at the right end of the "Cost Center" field, and select one of the entries.

In an alternative embodiment, a reference may simply be typed in the "Cost Center" field 82 without intervention of the accounting application 15.

When a user actually commands the print job, the information including the account number and the "Cost Center" information is transmitted to the accounting application 15. Then, when the printer actually prints the job, it sends print process data to the accounting application 15, which calculates the costs and stores them in the database 16.

When the user works on several different projects for one client, corresponding separate accounts may be stored in the database 16, or one account may be used, and additional information entered in the "Custom" field 83. This additional information is also reported to the accounting application 15 each time a print job is commanded.

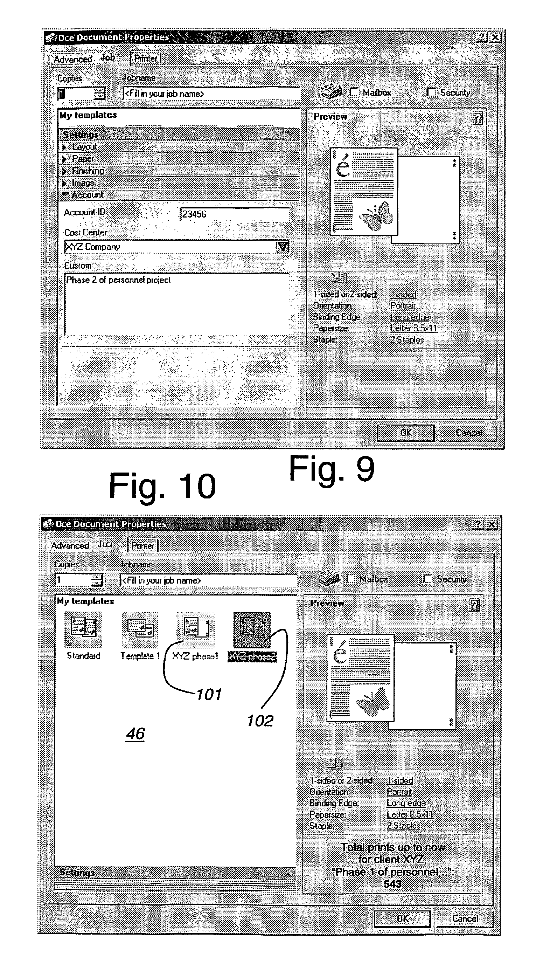

Every different entry in any of the fields 81, 82 or 83 gives rise to a new template in the template field 46, even if all of the other settings are equal, as is shown in the sequence of Fig. 8, 9 and 10. In Fig. 10, the two templates defined in Fig. 8 and 9, are shown as the two rightmost templates 101,102 in the Template field 46. As can be seen, the user has renamed them in order to recognize them.

In a further embodiment, the printer driver may query the accounting application 15 for information on the account or sub-account selected by the user. Such information would then preferably be presented in the Message field 44, and could include total accumulated costs up to that moment, special preferences of the client, etc.

Although the present invention has been described on the base of the embodiments above, the skilled person will recognize other embodiments within the scope of the claim formulations. Such embodiments are considered to be covered by the protection of the patent.

## Claims

1. A method of printing documents from a user workstation, comprising:
- activating a printer driver (10, 30) for submitting a digital document file to a printer (2),
- specifying print process settings (41, 42) in the printer driver (10, 30), and
- commanding the driver to submit the document file and the settings to the printer (2),
wherein values of settings are either individually or collectively specified, a collective specification being a selection (S20, S30) of a user-selectable prestored set of settings, further to be called "template" (46),
**characterized in that**
each time a value of at least one of a predetermined set of settings is individually specified by the user and confirmed (S50, S60) by a user command to submit the document file and the settings to the printer, a new template (60) is automatically defined and made selectable In the printer driver (30).

2. A method according to claim 1, wherein a new template is not defined if it does not differ, in said predetermined set of settings, from an already existing template.

3. A method according to claim 1, wherein an individual specification of a setting value comprises changing said value in a template (S50).

4. A method according to claim 1, wherein a new template is made permanent by a save action of the user (S60).

5. A method according to claim 4, wherein a maximum number N of new templates that have not been made permanent by the user is maintained on a first in - first out basis (S82, S84).

6. A method according to claim 5, wherein N < 4.

7. A method according to claim 6, wherein N = 1.

8. A method according to claim 5, wherein N is a configurable value, settable by a user.

9. A method according to claim 1, including allowing a user to define a name for a template (61).

10. A method according to claim 9, wherein renaming a new template that has not been made permanent automatically includes a save action.

11. A method according to claim 1, including allowing a user to delete a template (61).

12. A method according to claim 1, wherein at least one pre-defined template can never be deleted by a user.

13. A method according to claim 1, including presenting templates in a selection window (46) on the workstation display screen.

14. A method according to claim 1, including presenting a summary of values of a plurality of settings in accordance with a selected template in a window (43) on the workstation display screen.

15. A method according to claim 1, including presenting an summary of values of a plurality of settings in accordance with currently specified settings In a window (42) on the workstation display screen.

16. A printer driver for use in a workstation (1) such as a PC for printing document files to a printer (2), comprising
a data processing section (11) for processing document data and submitting the processed document data to a printer and
a graphical user interface section (12) for communication with a user by presenting information on the display screen of the workstation (1),
said printer driver being laid out for implementing the method according to any one of claims 1 to 15.

17. A computer program comprising computer code implementing the method according to any one of claims 1 to 15 when executed In a computer.

18. A computer-readable medium carrying computer code implementing the method according to any one of claims 1 to 15.

## Patentansprüche

1. Verfahren zum Drucken von Dokumenten von einer Workstation eines Benutzers aus, mit:
- Aktivieren eines Druckertreibers (10, 30) zur Übermittlung einer digitalen Dokumentendatei an einen Drucker (2),
- Spezifizieren von Druckprozeßeinstellungen (41, 42) in dem Druckertreiber (10, 30) und
- Anweisung an den Treiber, die Dokumentendatei und die Einstellungen an den Drucker (2) zu übermitteln,
wobei Werte der Einstellungen entweder einzeln oder kollektiv spezifiziert werden, wobei eine kollektive Spezifizierung eine Auswahl (S20, S30) aus einem benutzerwählbaren vorgespeicherten Satz von Einstellungen ist, die im folgenden als "Vorlagen" (46) bezeichnet werden,
**dadurch gekennzeichnet, daß**
jedesmal, wenn ein Wert wenigstens einer Einstellung aus einem vorbestimmten Satz von Einstellungen durch den Benutzer individuell spezifiziert und durch einen Benutzerbefehl zur Übermittlung der Dokumentendatei und der Einstellungen an den Drucker bestätigt wird (S50, S60), eine neue Vorlage (60) automatisch definiert und in den Druckertreiber (30) auswählbar gemacht wird.

2. Verfahren nach Anspruch 1, bei dem eine neue Vorlage nicht definiert wird, wenn sie sich in dem vorbestimmten Satz von Einstellungen nicht von einer bereits existierenden Vorlage unterscheidet.

3. Verfahren nach Anspruch 1, bei dem eine individuelle Spezifizierung eines Einstellwertes die Änderung dieses Wertes in einer Vorlage umfaßt (S50).

4. Verfahren nach Anspruch 1, bei dem eine neue Vorlage durch eine Sicherungsaktion des Benutzers permanent gemacht wird (S60).

5. Verfahren nach Anspruch 4, bei dem eine maximale Anzahl N neuer Vorlagen, die von dem Benutzer nicht permanent gemacht worden sind, nach dem first in - first out Prinzip festgehalten werden (S82, S84).

6. Verfahren nach Anspruch 5, mit N < 4.

7. Verfahren nach Anspruch 6, mit N = 1.

8. Verfahren nach Anspruch 5, bei dem N ein von einem Benutzer einstellbarer konfigurierbarer Wert ist.

9. Verfahren nach Anspruch 1, bei dem es dem Benutzer erlaubt ist, einen Namen für eine Vorlage (61) zu definieren.

10. Verfahren nach Anspruch 9, bei dem eine Umbenennung einer neuen Vorlage, die noch nicht permanent gemacht worden ist, automatisch eine Sicherungsaktion einschließt.

11. Verfahren nach Anspruch 1, bei dem es einem Benutzer erlaubt ist, eine Vorlage (61) zu löschen.

12. Verfahren nach Anspruch 1, bei dem wenigstens eine vordefinierte Vorlage niemals durch einen Benutzer löschbar ist.

13. Verfahren nach Anspruch 1, mit Präsentation von Vorlagen in einem Auswahlfenster (46) auf dem Anzeigeschirm der Workstation.

14. Verfahren nach Anspruch 1, mit Präsentation einer Zusammenfassung von Werten einer Vielzahl von Einstellungen in Übereinstimmung mit einer ausgewählten Vorlage in einem Fenster (43) auf dem Anzeigeschirm der Workstation.

15. Verfahren nach Anspruch 1, mit Präsentation einer Zusammenfassung von Werten einer Vielzahl von Einstellungen in Übereinstimmung mit aktuell spezifizierten Einstellungen in einem Fenster (42) auf dem Anzeigeschirm der Workstation.

16. Druckertreiber zur Verwendung in einer Workstation (1), etwa einem PC, zum Drucken von Dokumentendateien auf einem Drucker (2), mit:
einem Datenverarbeitungsteil (11) zum Verarbeiten von Dokumentendaten und zur Übermittlung der verarbeiteten Dokumentendaten an einen Drucker, und
einer graphischen Benutzerschnittstelle (12) zur Kommunikation mit einem Benutzer durch Präsentation von Information auf dem Anzeigeschirm der Workstation (1),
wobei der Druckertreiber dazu ausgelegt ist, das Verfahren nach einem der Ansprüche 1 bis 15 zu implementieren.

17. Computerprogramm mit Computercode, der das Verfahren nach einem der Ansprüche 1 bis 15 implementiert, wenn er auf einem Computer ausgeführt wird.

18. Computerlesbares Medium, das Computercode enthält, der das Verfahren nach einem der Ansprüche 1 bis 15 implementiert.

## Revendications

1. Procédé d'impression de documents à partir d'un poste de travail d'un utilisateur, comprenant les étapes consistant à :
- activer un pilote d'imprimante (10, 30) de manière à envoyer un fichier de document numérique à une imprimante (2),
- spécifier des configurations de processus d'impression (41, 42) dans le pilote d'imprimante (10, 30), et
- commander au pilote d'envoyer le fichier de document et les configurations à l'imprimante (2),
dans lequel les valeurs des configurations sont spécifiées de manière individuelle ou collective, une spécification collective étant une sélection (S20, S30) d'un ensemble de configurations stocké au préalable et pouvant être sélectionné par l'utilisateur, désigné par la suite sous le nom de « modèle » (46),
**caractérisé en ce que :**
chaque fois qu'une valeur de l'une au moins d'un ensemble prédéterminé de configurations, est spécifiée de manière individuelle par l'utilisateur et confirmée (S50, S60) par une commande par l'utilisateur consistant à envoyer le fichier de document et les configurations à l'imprimante, un nouveau modèle (60) est défini de manière automatique et rendu comme pouvant être sélectionné dans le pilote d'imprimante (30).

2. Procédé selon la revendication 1, dans lequel un nouveau modèle n'est pas défini s'il ne diffère pas, dans ledit ensemble prédéterminé de configurations, d'un modèle déjà existant.

3. Procédé selon la revendication 1, dans lequel une spécification individuelle d'une valeur de configuration comprend la modification de ladite valeur dans un modèle (S50).

4. Procédé selon la revendication 1, dans lequel un nouveau modèle est rendu permanent par une action de sauvegarde de l'utilisateur (S60).

5. Procédé selon la revendication 4, dans lequel un nombre maximum N de nouveaux modèles qui n'ont pas été rendus permanents par l'utilisateur, est mis à jour sur une base premier entré - premier sorti (S82, S84).

6. Procédé selon la revendication 5, dans lequel N < 4.

7. Procédé selon la revendication 6, dans lequel N = 1.

8. Procédé selon la revendication 5, dans lequel N est une valeur qui peut être configurée, fixée par un utilisateur.

9. Procédé selon la revendication 1, comprenant le fait de permettre à un utilisateur de définir un nom de modèle (61).

10. Procédé selon la revendication 9, dans lequel le fait de renommer un nouveau modèle qui n'a pas été rendu permanent, comprend de manière automatique une action de sauvegarde.

11. Procédé selon la revendication 1, comprenant le fait de permettre à un utilisateur de supprimer un modèle (61).

12. Procédé selon la revendication 1, dans lequel au moins un modèle prédéfini ne peut jamais être supprimé par un utilisateur.

13. Procédé selon la revendication 1, comprenant le fait de présenter des modèles dans une fenêtre de sélection (46) sur l'écran d'affichage du poste de travail.

14. Procédé selon la revendication 1, comprenant le fait de présenter un récapitulatif des valeurs d'une pluralité de configurations selon un modèle sélectionné dans une fenêtre (43) sur l'écran d'affichage du poste de travail.

15. Procédé selon la revendication 1, comprenant le fait de présenter un récapitulatif des valeurs d'une pluralité de configurations selon des configurations actuellement spécifiées dans une fenêtre (42) sur l'écran d'affichage du poste de travail.

16. Pilote d'imprimante destiné à être utilisé dans un poste de travail (1) tel qu'un PC pour imprimer des fichiers de document d'impression vers une imprimante (2), comprenant :
une section de traitement de données (11) destinée à traiter des données de document et à envoyer les données de document traitées vers une imprimante, et
une section d'interface graphique utilisateur (12) pour une communication avec un utilisateur en présentant des informations sur l'écran d'affichage du poste de travail (1),
ledit pilote d'imprimante étant conçu de manière à appliquer le procédé selon l'une quelconque des revendications 1 à 15.

17. Programme informatique comprenant un code informatique qui met en application le procédé selon l'une quelconque des revendications 1 à 15 quand il est exécuté dans un ordinateur.

18. Support pouvant être lu par un ordinateur, exécutant un code informatique qui met en application le procédé selon l'une quelconque des revendications 1 à 15.
